(19) **Europäisches Patentamt / European Patent Office / Office européen des brevets**

(11) **EP 4 556 938 A1**

(12) **EUROPEAN PATENT APPLICATION**

(43) Date of publication:
**21.05.2025 Bulletin 2025/21**

(21) Application number: **23210023.0**

(22) Date of filing: **15.11.2023**

(51) International Patent Classification (IPC):
**G01S 7/02** (2006.01)   **G01S 7/40** (2006.01)
**G01S 13/931** (2020.01)

(52) Cooperative Patent Classification (CPC):
**G01S 7/4013; G01S 7/038; G01S 7/406;**
G01S 13/931

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NXP B.V.**
**5656 AG Eindhoven (NL)**

(72) Inventors:
• **PANDHARIPANDE, Ashish**
**5656AG Eindhoven (NL)**

• **Joudeh, Hamish**
**5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

Remarks:
Amended claims in accordance with Rule 137(2) EPC.

(54) **SELF-INTERFERENCE REDUCTION FOR RADAR SYSTEMS**

(57) A radar system operates in two modes: a calibration mode and a sensing mode. In the calibration mode, the radar system sends a set of test signals via a set of transmitters and receives responsive signals at a corresponding set of receivers. Based on the received signals, the radar system estimates the channel responses. In a sensing mode of operation, the radar system transmits a signal, receives a responsive set of signals at the receivers, and detects characteristics of nearby objects based on the received signals. In the sensing mode, the radar system employs the estimated channel responses to precode the signals for transmission and thereby reduces the components of the received signals that are due to self-interference.

**FIG. 1**

EP 4 556 938 A1

**Description**

BACKGROUND

Radar systems are used in a variety of devices to detect and identify objects and determine information about the objects such as their range, velocity, direction, or material. For example, some automobiles rely on radar to detect information about nearby objects, and thereby support autonomous driving or other driver assistance functions. To detect information about the nearby objects, a radar system typically transmits a received signal via one or more transmitters, receives one or more reflected signals (that is, signals generated by reflections of the received signal at the nearby objects) at one or more receivers, and analyzes the received signals to determine the range, velocity and other information about the objects. In some cases, a radar system can be impacted by self-interference, wherein the close proximity of a radar system and receiver, or the presence of objects in very close proximity to the transmitter, results in the transmitted signal interfering with the reception and analysis of the reflected signals. This self-interference can cause, for example, the misidentification or misdetection of objects in the proximity of the radar system.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a block diagram of a radar system that reduces the impact of a self-interference signal by precoding a radar signal based on an estimated channel response of the system in accordance with some embodiments.

FIG. 2 is a block diagram illustrating an example of the radar system of FIG. 1 precoding a radar signal in a first mode of operation based on transmitting a test signal in a second mode of operation in accordance with some embodiments.

FIG. 3 is a block diagram illustrating an example of the radar system of FIG. 1 generating a precoding signal based on the estimated channel response in accordance with some embodiments.

FIG. 4 is a flow diagram of a method of reducing the impact of a self-interference signal on the sensing of objects at a radar system in accordance with some embodiments.

DETAILED DESCRIPTION

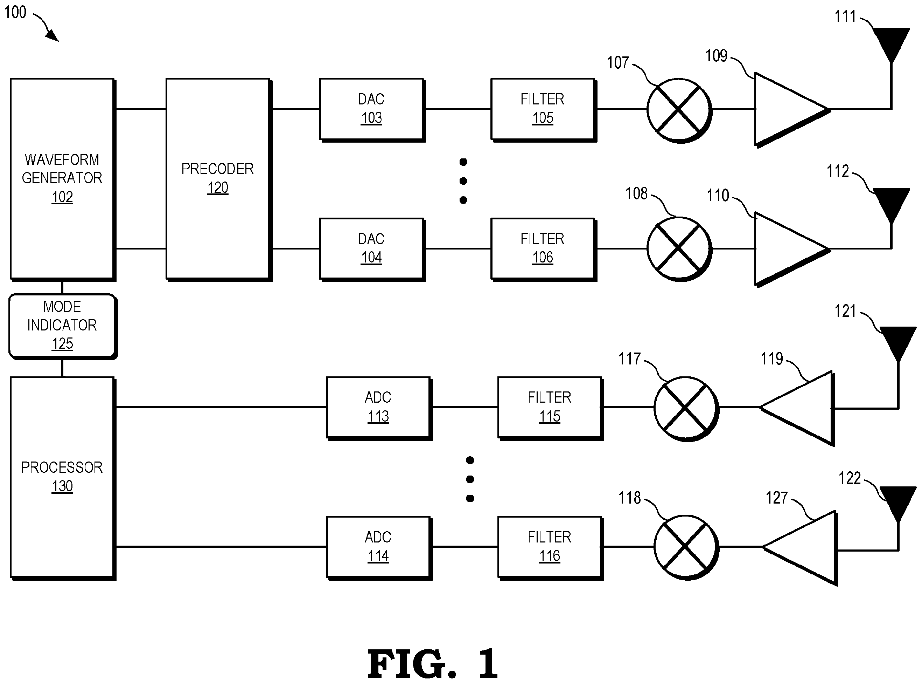

FIGs. 1-4 illustrate techniques for reducing the impact of self-interference at a radar system by precoding transmitted radar signals based on one or more estimated channel responses at the radar system. The radar system operates in two modes: a calibration mode and a sensing mode. In the calibration mode, the radar system sends a set of test signals via a set of transmitters and receives responsive signals at a corresponding set of receivers. Based on the received signals, the radar system estimates the channel responses. In a sensing mode of operation, the radar system transmits a signal, receives a responsive set of signals at the receivers, and detects characteristics of nearby objects based on the received signals. In the sensing mode, the radar system employs the estimated channel responses to precode the signals for transmission and thereby reduces the components of the received signals that are due to self-interference. The radar system thus reduces the impact of self-interference on system performance, including reducing the number of false detections (e.g., the number of detected "ghost" images) and increasing the likelihood of correctly detecting nearby objects.

To further illustrate via an example, in some embodiments a radar system includes a set of transmitters and a set of receivers. In the calibration mode of operation, the radar system transmits a test signal from the set of transmitters based on a specified digital sequence. In at least some embodiments, the test signal is transmitted at a relatively low power level to avoid interference of objects and to avoid the potential of non-linear behavior of the receivers in the presence of a strong signal in the calibration of the system. In response to transmitting the test signal, the radar system receives a test response signal at the set of receivers. Based on the test response signal, the radar system determines a channel response resulting from self-interference. Based on the channel response, the radar system generates a precoding signal that, when combined with the signal to be transmitted, reduces or eliminates the effect of self-interference in the resulting received signals. This configuration reduces the component of the received signal that results from self-interference, thereby improving the performance of the radar system.

FIG. 1 illustrates a radar system 100 in accordance with some embodiments. As described further below, the radar system 100 is generally configured to detect objects within proximity of a device that includes the radar system 100 and, at least in some embodiments, is configured to determine characteristics of the detected objects, such as position information (e.g., directional information, range information), radial velocity information, and the like. For purposes of description, it is assumed that the radar system 100 is employed as a component of an automobile (e.g., to support an autonomous driving system), but it will be appreciated that in other embodiments the radar system is employed as a component of any device that employs radar to detect objects.

To support the detection of objects, the radar system 100 employs a waveform generator 102, a set of transmit and receive channels (described in more detail below), and a processor 130. In some embodiments, the waveform generator 102 is a digital waveform generator including a set of circuits configured to generate specified sequences of digital values that collectively form digital signals for conversion to an analog signal and subsequent transmission, as described further below. The specified sequences depend on the type of radar waveform implemented by the radar system 100. For the purposes of description of the example of FIG. 1, it is assumed that the waveform generator 102 generates digitally modulated waveforms, and in particular phase modulated continuous wave (PMCW) waveforms. In other embodiments, the radar system 100 is an orthogonal frequency division multiplexing (OFDM) system, and the waveform generator 102 generates OFDM sequences. In still other embodiments, the radar system 100 is a digitized frequency modulated continuous wave (FMCW) system and the waveform generator 102 generates FMCW sequences. In still other embodiments, the radar system 100 is a frequency modulated continuous wave (FMCW) system whose frequency is modulated in phase (PM-FMCW radar).In yet other embodiments the radar system 100 is an orthogonal time frequency space (OTFS) modulation radar system.

The radar system 100 includes a set of N transmitter channels and a corresponding set of M receive channels, where N and M are integers. In some embodiments, M and N are different (that is, the radar system 100 includes a different number of transmitter channels and receive channels). For ease of illustration, FIG. 1 depicts two transmitter channels and two receive channels. Each transmitter channel includes a digital-to-analog converter (DAC) (e.g., DACs 103 and 104) a filter () (e.g., filters 105 and 106), a quadrature mixer (e.g., quadrature mixers 107 and 108), an amplifier (e.g., amplifiers 109 and 110) and a transmit antenna (e.g., transmit antennae 111 and 112).

The DAC of a transmitter channel is a set of circuits configured to receive a digital waveform generated by the waveform generator 102 and to convert the sequence of digital values to an analog signal having characteristics (e.g., amplitude and frequency) governed by the sequence of digital values. The filter of a transmitter channel is a set of circuits configured to filter the analog signal generated by the corresponding DAC to filter out signal components, thereby shaping the frequency spectrum of the analog signal to be within a corresponding frequency range.

The mixer of a transmitter channel is a set of circuits configured to modulate the signal provided by the corresponding filter to a specified carrier frequency $f_c$. The power amplifier of a transmitter channel is a set of circuits configured to amplify the modulated signal provided by the corresponding mixer. In at least some embodiments, the amplifier of a transmitter channel is programmable or modifiable to generate output signals at different power levels. The transmit antenna of a transmitter channel is a transducer that converts the amplified signal generated by the corresponding amplifier to an electromagnetic radar signal and transmits the radar signal over a corresponding medium (e.g., the air). After being transmitted by the transmit antenna, the transmitted radar signal propagates in the environment of the radar system 100 environment and reflects off of one or more nearby objects to generate a reflected signal.

Each receive channel includes a receive antenna (e.g., receive antennae 121 and 122), a low-noise amplifier (e.g., amplifiers 119 and 127), a quadrature mixer (e.g., quadrature mixers 117 and 118), a filter (e.g., filters 115 and 116) and an analog-to-digital converter (ADC) (e.g., ADCs 113 and 114). In some embodiments, each receive channel includes two ADCs in order to sample a complex signal. Furthermore, in some embodiments the receive channels include other mixers (e.g., non-quadrature mixers). The receive antenna of a receive channel is a transducer that converts a received reflected signal to an electrical signal. In some embodiments, the receiver includes a plurality of receive antennas to support direction of arrival (DoA) calculations of the received reflection of the radar signal.

The amplifier 119 of a receive channel is a set of circuits configured to amplify the signal provided by the corresponding receive antenna. The quadrature mixer of a receive channel is a set of circuits configured to demodulate the signal generated by the corresponding amplifier. In some embodiments, each quadrature mixer of a receive channel demodulates the received signal with analogous quadrature signals as those applied at the quadrature mixer of the corresponding transmitter channel to generate the analog components of the received signal. The ADC of a receive channel is a set of circuits configured to convert the analog components of the signal generated by the corresponding quadrature mixer, thereby generating a digital signal representative of the reflected radar signal.

In some embodiments, the processor 130 is a processor device, such as a central processing unit (CPU) configured to execute instructions (e.g., applications) to carry out the operations described further herein. In other embodiments, the processor 130 represents dedicated circuitry designed and configured to perform the operations described further herein. For example, in different embodiments the processor 130 represents a hardcoded circuit (e.g., a corresponding portion of an application specific integrated circuit (ASIC) or a set of logic gates, storage elements, and other components selected and arranged to execute the ascribed operations), a programmable circuit (e.g., a corresponding portion of a field programmable gate array (FPGA) or programmable logic device (PLD)) that performs the operations described further herein. Examples of the operations executed by the processor 130 includes determining, based on the reflected radar signals received via the receive channels, characteristics of one or more objects in proximity of the radar system 100, such as object velocity, object range, object direction, and the like.

As noted above, in at least some cases a radar system can experience self-interference, whereby the signal transmitted by a transmit antenna is directly coupled to a receive antenna. Self-interference can also result from the presence of an object (e.g., an automobile bumper) in close proximity to the radar system. This self-interference can, in effect, "blind" the radar and lead to missed detections of objects. To address self-interference, the radar system 100 is configured to operate in two different modes, referred to as a calibration mode and a sensing mode. In the calibration mode, each of the transmitter channels of the radar system 100 transmits a low-power digital sequence that covers a specified region of interest. The signal transmitted in the calibration mode is referred to as a calibration signal. Based on the signals received at the receive channels in response to the calibration signal, the processor 130 determines a channel response between each pair of transmit and receive antennae. For example, the processor 130 determines a channel response between the transmit antenna 111 and the receive antenna 121.

The channel response for a channel indicates the characteristics and behavior of the channel resulting from the transmission of the test signal, and without any reflected signals from objects that are to be detected in the sensing mode. In other words, the channel response indicates the characteristics and behavior of the channel due to self-interference. Based on the channel response, the processor 130 estimates the characteristics (e.g., the signal coefficients) of a pre-coding signal. In the sensing mode, the radar system uses a precoder 120 to modify the signal generated by the waveform generator 102 to reduce the effects of self-interference in a received signal.

To illustrate, in the sensing mode, each of the transmitter channels of the radar system 100 transmits relatively high-power signals, referred to as sensing signals, to cover a specified region of interest. The sensing signals are based on, for example, digital sequences or other waveforms generated by the waveform generator 102. In some embodiments, the digital sequences or other waveforms generated by the waveform generator in the sensing mode are the same as the sequences or other waveforms in the calibration mode but are transmitted by the radar system 100 at a higher power in the sensing mode. The transmitted sensing signals reflect off of an object in the region of interest, and the reflected signals are received at the receive channels of the radar system 100. In the sensing mode, for each channel, the radar system 100 employs the precoder 120 to modify the signal generated by the waveform generator to reduce or eliminate the effects of self-interference in the resulting received signals. The processor 130 uses the received signals to perform radar operations, such as object detection and analysis (e.g., object distance, direction, and velocity). Because the precoding represents the channel response resulting from self-interference, precoding the transmitted signal in this way reduces the impact of self-interference on object detection and analysis, and thus improves the performance of the radar system 100.

To control the mode of operation, the radar system 100 includes a mode indicator 125. In some embodiments, the mode indicator 125 is a programmable value stored in a register, a flag, or other storage element. Under specified conditions, the processor 130 programs the stored value to set the mode of the radar system 100 to either the calibration mode or the sensing mode. For example, in some embodiments the processor 130 places the radar system 100 in the calibration mode during a system initialization process, and then estimates the channel response and precoding signal characteristics, such as a precoding matrix, for each of the channels of the radar system 100 as described herein. The processor 130 then sets the mode indicator 125 to the sensing mode, and commands each of the transmitter channels to issue received signals. The precoder 120 employs the precoding signal characteristics to modify the signal generated by the waveform generator 102 in the sensing mode, thereby changing the characteristics of the signal to be transmitted so that the effects of self-interference on the signals received at each receive channel is reduced or eliminated. In some embodiments, the radar system 100 re-enters the calibration mode, and re-estimates the channel responses and precoding signals, on a periodic basis, and thereby adapts the estimated channel responses and cancellation signals to changing system conditions.

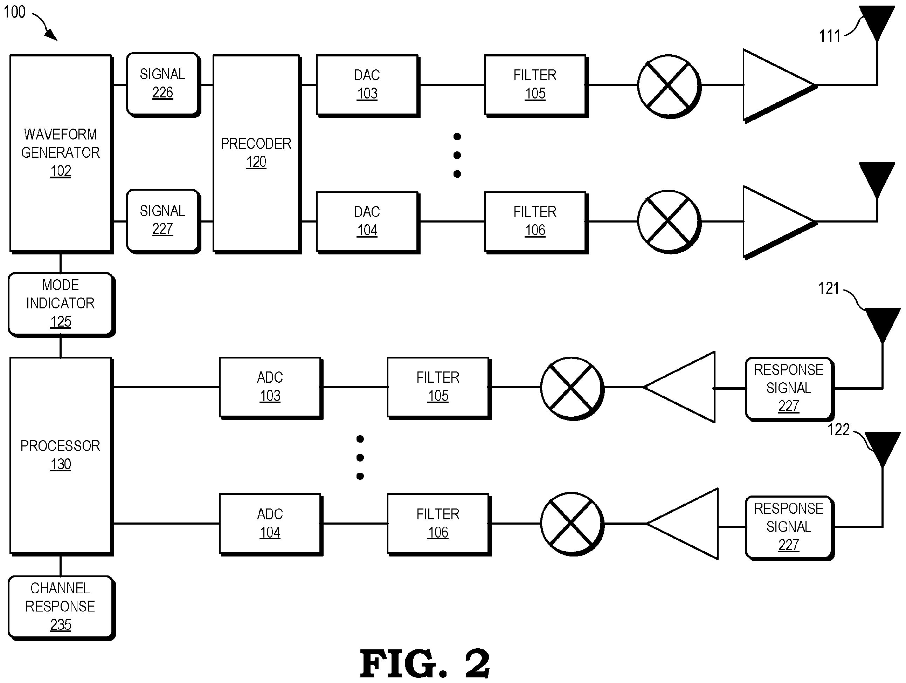

FIG. 2 illustrates an example of the radar system 100 estimating a channel response in the calibration mode and precoding a sensing signal for transmission in the sensing mode in accordance with some embodiments. The radar system 100 is first places in the calibration mode, and the waveform generator 102 issues a signal (e.g., signals 226 and 227) for each transmission channel. In the calibration mode, the precoder 120 does not precode the signals 226 and 227. Further, in the calibration mode the radar system 100 sets the transmission channels so that the signals 226 and 227 are transmitted as calibration signals at a relatively low power. The power level of the calibration signals can be set in different ways in different embodiments. For example, in some embodiments the transmission signals are set to a low power level by the radar system 100 setting a gain of the transmit amplifiers (e.g., the low-noise amplifiers 109 and 110) to a relatively low gain setting. In other embodiments, the calibration signals are set to a low power level by the radar system 100 setting an intermediate frequency (IF) gain for the system to a low power level. In still other embodiments, the calibration signals are set to a low power level by setting the peak-to-peak voltage adaptation of the ADCs 113 and 114 to a low power setting. In still other embodiments, a combination of these techniques is used.

The signals 226 and 227 are converted by the transmitter channel to analog signals, processed, and transmitted by the corresponding transmit antennae. In response, the receive antennae 121 and 122 receive a response signal 227.

Because the test signals 226 and 227 were transmitted at a low power level, the response signal 227 represents the effects of self-interference at the corresponding channels of the radar system 100. The response signal is processed and converted to a digital signal, and the processor 130 analyzes the digital signal to determine estimated channel responses for each channel (e.g., estimated channel response 235). Based on the channel response 235, the processor 130 determines the characteristics of a precoding signal that, when combined with a transmitted signal in the sensing mode, reduces the impact of self-interference on the analysis of the received signal.

In the sensing mode, the waveform generator 102 again generates the signals 226 and 227 for transmission. However, in the sensing mode, the precoder 120 precodes each of the signals 226 and 227, resulting in modified sensing signals that are transmitted by the transmitter antennae. Furthermore, the modified signals are transmitted as sensing signals by the radar system at a relatively high power level as compared to the transmission of signals in the calibration mode.

In the sensing mode, the receive channels receive the response signal 227. However, in the sensing mode, the response signal 227 is based on the precoded transmission signal. Accordingly, in the sensing mode, the characteristics of the response signal 227 are such that any signal components resulting from self-interference are reduced or eliminated. The processor 130 is thus able to more reliably and accurately identify the characteristics of sensed objects in the sensing mode.

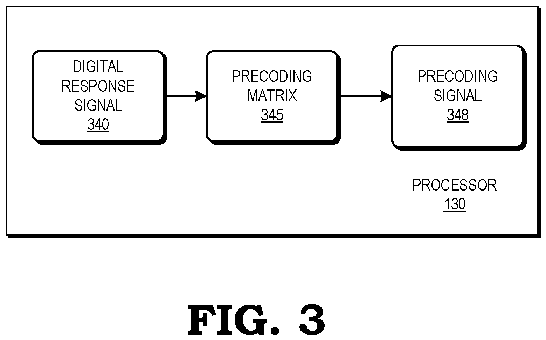

An example of the processor 130 generating a precoding signal is illustrated at FIG. 3 in accordance with some embodiments. In the depicted example, the processor 130 accesses a digital response signal 340, representing a digitized version of a response signal (e.g., response signal 227 of FIG. 2) received by a channel in the calibration mode. Based on the digital response signal 340, the processor 130 determines a precoding matrix 345, representing the channel response 235 for the channel due to self-interference.

For example, for a sufficiently small transmit power level of the test signal 226, the received reflections are due to the spillover of the signal from the transmit antenna to the corresponding receive antenna. That is, because the power level of the test signal 226 is relatively low, distant environmental objects do not impact the response signal, as the signal components due to these environmental objects are below the noise floor. Accordingly, in the calibration mode the received signal at element $m$ can be expressed as

$$y_m^L = \sum_n G'_{mn} * x_n + z_m$$

where $y_m^L$ is the received signal in the calibration mode, $G'_{mn}$ are the self-interference channel coefficients between the m-th receive channel element and the n-th transmitter element, and $z_m$ is the receive channel thermal noise component.

In some embodiments, the received signal vector at the M-element receiver radar array is expressed as:

$$y[k] = \left( \sum_{k=1}^K H_k + G \right) Ps[k] + z[k]$$

where $y[k]$ is the received signal vector, $\sum_{k=1}^K H_k + G$ is the composite channel consisting of the radar channel with K targets and the self-interference channel between the transmitter and receiver arrays, $Ps[k]$ is the precoded signal, and $z[k]$ is the noise component.

The target response matrix is expressed as:

$$H_k = \beta_k b(\theta_k) a^H(\theta_k)$$

where $\beta_k$ is a set of complex coefficients capturing the random phase shift and pathloss of the response; $\theta_k$ is the (azimuth) angle or direction of target-A; and $a(\theta_k)$ and $b(\theta_k)$ are the transmit and receive array steering vectors.

In some embodiments, the linearly precoded probing signal 348 has the following format:

$$x[k] = Ps[k]$$

where $\boldsymbol{P}$ is the precoding matrix 345 that remains fixed over the entire frame, while $\boldsymbol{s}[k]$ is the digital radar waveform generated by the waveform generator 102 over the multiple transmitter elements.

In some embodiments, the precoding matrix 345 is a "zero-forcing" matrix that, when applied to the waveform generated by the waveform generator 102, removes substantially all of the self-interference components from the resulting received signals. In these embodiments the precoding matrix 345 can be expressed as:

$$P_{ZF} = \frac{1}{\gamma}(I - G^H(GG^H)^{-1}G)$$

where $\gamma$ is a normalizing factor that ensures trace($\boldsymbol{P}_{ZF}\boldsymbol{P}_{ZF}{}^H$) = 1. By precoding the waveform generated by the waveform generator 102 with this matrix, the received signal becomes:

$$y[k] = \left(\sum_{k=1}^{K} H_k + G\right)\frac{1}{\gamma}(I - G^H(GG^H)^{-1}G)s[k] + z[k] = \frac{1}{\gamma}\sum_{k=1}^{K} H_k \left(I - \right.$$
$$\left. G^H(GG^H)^{-1}G\right)s[k] + z[k]$$

In some embodiments, to achieve satisfactory precoding ($\boldsymbol{GG}^H$) is invertible, and hence the self-interference (SI) channel matrix $\boldsymbol{G}$ has full row rank., for which $M \leq N$ (that is, the number of receive channels is less or equal to the number of transmit channels). Also, for $M = N$, the precoding results are $\boldsymbol{0}$ if ($\boldsymbol{GG}^H$) is invertible.

In some embodiments, the invertibility and nullity in the above example of precoding matrix 345 is addressed by using regularization in which case the precoding matrix 345 is:

$$P_{RZF} = \frac{1}{\gamma}(I - G^H(\epsilon I + GG^H)^{-1}G) = \frac{1}{\gamma}\left(I + \frac{1}{\epsilon}G^H G\right)^{-1}$$

where $\gamma$ ensures trace($P_{RZF}P_{RZF}{}^H$) = 1. Note that here ($\varepsilon I + GG^H$) is always invertible.

In some embodiments, the precoding matrix 345 is a "limiting" matrix, also referred to as a non-zero-forcing matrix, that, when applied to the waveform generated by the waveform generator 102, removes some but not all of the self-interference components from the resulting received signals. For example, in some embodiments the precoding matrix 345 is set so that the self-interference component of the received signals does not saturate the ADCs of the receive channels. In these embodiments, the orthogonality of s[k] indicates the following:

$$\frac{1}{T}\sum_{k=1}^{T} x[k]x^H[k] \approx \rho PP^H = \rho R$$

where R is a symmetric positive semidefinite covariance matrix with trace(R) $\leq$ 1. Generating the precoding matrix 345 (the matrix P) is equivalent to generating R. Accordingly, the processor 130 sets the following parameters:

$$P = P_{RZF} = \frac{1}{\gamma}\left(I + \frac{1}{\epsilon}G^H G\right)^{-1}$$

and parametrizes the covariance matrix in terms of the regularization constant as R($\varepsilon$).

Given a covariance matrix R($\varepsilon$), SI leakage power at the receiver is expressed as

$$L(R(\epsilon)) = \frac{1}{T}\sum_{k=1}^{T} ||Gx[k]||^2 \approx \rho \cdot \text{trace}(GR(\epsilon)G^H)$$

Accordingly, in some embodiments the precoder 120 the following optimization problem:

$$\max \epsilon \ \text{s.t.} \ \epsilon \geq 0, \ L(R(\epsilon)) \leq t$$

In some cases, decreasing $\varepsilon$ nulls out more leakage power at the expense of reducing the transmit power in some angular directions. On the other hand, increasing $\varepsilon$ reduces this nulling effect but transmits a more uniform power profile in all directions. Accordingly, in some embodiments the precoder 120 controls SI such that it is below a specified threshold level t, while keeping the transmit beam patterns uniform (isotropic). In some embodiments, $L(R(\varepsilon))$ is monotonically increasing in $\varepsilon$ and the above problem is solved using optimization methods such as the bisection method.

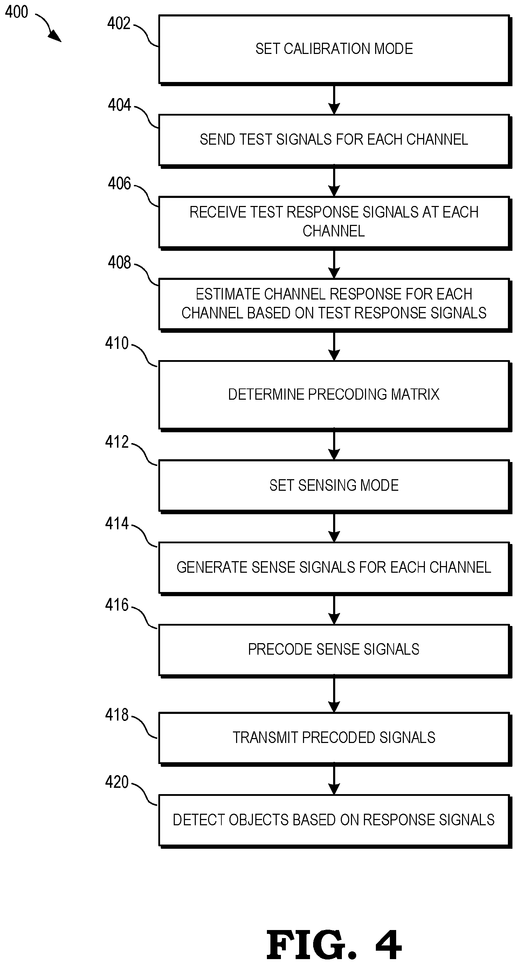

FIG. 4 illustrates a flow diagram of a method 400 of reducing the impact of self-interference on detection of objects at a radar system in accordance with some embodiments. For purposes of description, the method 400 is described with respect to an example implementation at the radar system 100 of FIG. 1, but in other embodiments the method 400 is implemented at other radar systems having a different configuration. The method 400 begins at block 402 and the processor 130 sets the mode indicator 125 to the calibration mode. For example, during a boot process or other initialization process, the processor 130 (or other component of the radar system 100) stores a value at the mode indicator 125 to indicate the calibration mode.

At block 404, in response to the radar system 100 entering the calibration mode, each transmit channel sends a calibration signal, based upon a corresponding digital sequence generated by the waveform generator 102. In at least some embodiments, the digital sequence, and therefore the resulting calibration signal) is different for at least two of the transmit channels (e.g., a different digital sequence and calibration signal for each transmit signal). Furthermore, in some embodiments the calibration signals are transmitted at a relatively low power level. Furthermore, the calibration signals may be transmitted in a time-division, frequency-division, or code-division multiplexed manner over the transmitter antennas.

At block 406, in response to transmitting the calibration signals, each receive channel of the radar system 100 receives a response signal, and each receive channel processes and digitizes the corresponding response signal. At block 408, the processor 130 uses the digitized response signals to estimate a channel response for each channel of the radar system 100, wherein the estimated channel response for a channel indicates the expected effects of self-interference on the corresponding channel. At block 410 the processor 130 determines, for each receive channel and based on the corresponding estimated channel response, a precoding matrix.

At block 412 the processor 130 sets the radar system 100 to the sensing mode. For example, in response to the radar system 100 completing an initialization sequence, the processor 130 programs a value to the mode indicator 125 to indicate the sensing mode. In response to the radar system entering the sensing mode, at block 414 the waveform generator 102 generates waveforms (sense signals) to be transmitted by the transmit channels of the radar system 100. In at least some embodiments, the digital sequence for each transmit channel is the same as is used to generate the corresponding calibration signal, but each transmit channel transmits the resulting sense signal at a higher power level as compared to the calibration signals. At block 416 the precoder 120 uses the precoding matrices generated at block 416 to precode the sense signals generated by the waveform generator 102. At block 418 each transmission channel sends a corresponding precoded sense signal at a relatively high-power level. The power level of the sense signal can be set in different ways in different embodiments. For example, in some embodiments the sense signal is set to a high-power level by the radar system 100 setting a gain of the transmit amplifiers (e.g., the low-noise amplifiers 109 and 110) to a relatively high gain setting. In other embodiments, the sense signal is set to a high-power level by the radar system 100 setting an intermediate frequency (IF) gain for the system to a high-power level. In still other embodiments, the sense signal 226 is set to a high-power level by setting the peak-to-peak voltage adaptation of the ADCs 113 and 114 to a high-power setting. In still other embodiments, a combination of these techniques is used. At block 420, each receive channel of the radar system 100 receives a response signal responsive to the corresponding sense signal and the processor 130 uses the adjusted response signals to detect objects in proximity to the radar system 100 and determine characteristics of the detected objects, such as velocity, direction, and the like.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

It will be appreciated by now that disclosed herein is a method comprising: at a radar system including a first transmitter channel and a first receive channel, in a first mode of operation determining a first channel response between the first transmitter channel and the first receive channel; and in a second mode of operation of the radar system, precoding a sense signal to be transmitted based on the first channel response.

Determining the first channel response may comprise: transmitting a calibration signal; and determining the first channel response based on a signal in response to transmitting the calibration signal. The method may further comprise: transmitting the precoded sense signal in the second mode. The precoded sense signal may be a higher power signal than the calibration signal. The method may further comprise: setting the sense signal to a high power level in the first mode of operation by setting one or more of an amplifier setting, an intermediate frequency gain setting, and an analog-to-digital converter voltage adaptation setting of the radar system. Precoding the sense signal may comprise: generating a precoding matrix based on the first channel response; and precoding the first received signal based on the precoding matrix. Generating the precoding matrix may comprise generating a zero-forcing precoding matrix or generating a limiting precoding matrix. The limiting precoding matrix may be generated to limit the level of one or more received signals at an analog-to-digital converter of the radar system within specified levels.

There has further been disclosed a method, comprising: in a calibration mode of operation of a radar system, determining characteristics of a self-interference signal between a transmitter channel and a receive channel of the radar system; and in a sensing mode of operation of the radar system, precoding a signal to be transmitted based on the determined characteristics of the self-interference signal.

Determining characteristics of the self-interference signal may comprise: transmitting a calibration signal in the calibration mode of operation; and determining the characteristics of the self-interference signal based on a received signal received in response to the calibration signal. Determining characteristics of the self-interference signal may comprise: determining a precoding matrix based on the received signal.

There has further been disclosed a radar system comprising: a first transmitter channel and a first receive channel; and a processor configured to: in a first mode of operation determine a first channel response between the first transmitter channel and the first receive channel; and in a second mode of operation of the radar system, precoding a sense signal to be transmitted based on the first channel response.

The radar system may be configured to determine the first channel response by:

transmitting a calibration signal at the first transmitter channel; and determining the first channel response based on a received signal in response to transmitting the calibration signal. The radar system may be configured to:

transmit the precoded sense signal from the first transmitter channel in the second mode; and the precoded sense signal may be a higher power signal than the calibration signal. The radar system may be configured to: set the precoded sense signal to a high power level in the first mode of operation by setting one or more of an amplifier setting, an intermediate frequency gain setting, and an analog-to-digital converter voltage adaptation setting of the radar system.

The radar system may be to precode the sense signal by: generating a precoding matrix based on the first channel response; and precoding the received signal based on the precoding matrix. Generating the precoding matrix may comprise generating a zero-forcing precoding matrix, or generating a limiting precoding matrix.

The radar system may comprise a plurality of transmitter channels including the first transmitter channel and a plurality of receivers including the first receiver, and wherein the radar system is configured to precode signals to be transmitted for each of the plurality of transmitter channels of the radar system.

**Claims**

1.  A method comprising:

    at a radar system including a first transmitter channel and a first receive channel, in a first mode of operation determining a first channel response between the first transmitter channel and the first receive channel; and
    in a second mode of operation of the radar system, precoding a sense signal to be transmitted based on the first channel response.

2.  The method of claim 1, wherein determining the first channel response comprises:

    transmitting a calibration signal; and
    determining the first channel response based on a signal in response to transmitting the calibration signal.

3.  The method of claim 2, further comprising:
    transmitting the precoded sense signal in the second mode.

4.  The method of claim 3, wherein the precoded sense signal is a higher power signal than the calibration signal.

5.  The method of claim 4, further comprising:
    setting the sense signal to a high power level in the first mode of operation by setting one or more of an amplifier setting, an intermediate frequency gain setting, and an analog-to-digital converter voltage adaptation setting of the radar system.

6.  The method of any of claims 2 to 5, wherein precoding the sense signal comprises:

    generating a precoding matrix based on the first channel response; and
    precoding the first received signal based on the precoding matrix.

7.  The method of claim 6, wherein generating the precoding matrix comprises generating a one of a a zero-forcing precoding matrix and a limiting precoding matrix.

8.  The method of claim 7, wherein the limiting precoding matrix is generated to limit the level of one or more received signals at an analog-to-digital converter of the radar system within specified levels.

9.  A radar system comprising:

    a first transmitter channel and a first receive channel; and
    a processor configured to:

        in a first mode of operation determine a first channel response between the first transmitter channel and the first receive channel; and
        in a second mode of operation of the radar system, precoding a sense signal to be transmitted based on the first channel response.

10. The radar system of claim 9, wherein the radar system is configured to determine the first channel response by:

    transmitting a calibration signal at the first transmitter channel; and
    determining the first channel response based on a received signal in response to transmitting the calibration signal.

11. The radar system of claim 10, wherein the radar system is configured to:

    transmit the precoded sense signal from the first transmitter channel in the second mode; and

wherein the precoded sense signal is a higher power signal than the calibration signal.

12. The radar system of claim 11, wherein the radar system is configured to:
set the precoded sense signal to a high power level in the first mode of operation by setting one or more of an amplifier setting, an intermediate frequency gain setting, and an analog-to-digital converter voltage adaptation setting of the radar system.

13. The radar system of any of claims 10 to 12, wherein the radar system is to precode the sense signal by:

generating a precoding matrix based on the first channel response; and
precoding the received signal based on the precoding matrix.

14. The radar system of claim 13, wherein generating the precoding matrix comprises generating a one of a zero-forcing precoding matrix and a limiting precoding matrix.

15. The radar system of claim 13, wherein the radar system comprises a plurality of transmitter channels including the first transmitter channel and a plurality of receivers including the first receiver, and wherein the radar system is configured to precode signals to be transmitted for each of the plurality of transmitter channels of the radar system.

**Amended claims in accordance with Rule 137(2) EPC.**

1. A method (400) comprising:

at a radar system (100) including a first transmitter channel and a first receive channel, in a first mode of operation determining a first channel response (235) between the first transmitter channel and the first receive channel, wherein determining the first channel response comprises:

transmitting a calibration signal, and
determining the first channel response based on a signal in response to transmitting the calibration signal; and

in a second mode of operation of the radar system, precoding a sense signal to be transmitted based on the first channel response (235) and transmitting the precoded sense signal in the second mode, wherein the precoded sense signal is a higher power signal than the calibration signal.

2. The method (400) of claim 1, further comprising:
setting the sense signal to a high power level in the first mode of operation by setting one or more of an amplifier setting, an intermediate frequency gain setting, and an analog-to-digital converter voltage adaptation setting of the radar system.

3. The method (400) of any preceding claim, wherein precoding the sense signal comprises:

generating a precoding matrix based on the first channel response (235); and
precoding the first received signal based on the precoding matrix.

4. The method (400) of claim 3, wherein generating the precoding matrix comprises generating a one of a a zero-forcing precoding matrix and a limiting precoding matrix.

5. The method (400) of claim 4, wherein the limiting precoding matrix is generated to limit the level of one or more received signals at an analog-to-digital converter (104, 104) of the radar system within specified levels.

6. A radar system (100) comprising:

a first transmitter channel and a first receive channel; and
a processor (130) configured to:

in a first mode of operation determine a first channel response between the first transmitter channel and the first receive channel; and

in a second mode of operation of the radar system, precoding a sense signal to be transmitted based on the first channel response;

wherein the radar system (100) is configured to:

determine the first channel response by:

transmitting a calibration signal at the first transmitter channel; and
determining the first channel response (235) based on a received signal in response to transmitting the calibration signal; and

transmit the precoded sense signal from the first transmitter channel in the second mode; wherein the precoded sense signal is a higher power signal than the calibration signal.

7. The radar system (100) of claim 6, wherein the radar system is configured to:
set the precoded sense signal to a high power level in the first mode of operation by setting one or more of an amplifier setting, an intermediate frequency gain setting, and an analog-to-digital converter voltage adaptation setting of the radar system.

8. The radar system (100) of any of claims 6 to 7, wherein the radar system is to precode the sense signal by:

generating a precoding matrix based on the first channel response; and
precoding the received signal based on the precoding matrix.

9. The radar system (100) of claim 8, wherein generating the precoding matrix comprises generating a one of a zero-forcing precoding matrix and a limiting precoding matrix.

10. The radar system (100) of claim 8, wherein the radar system comprises a plurality of transmitter channels including the first transmitter channel and a plurality of receivers including the first receiver, and wherein the radar system is configured to precode signals to be transmitted for each of the plurality of transmitter channels of the radar system.

FIG. 1

EP 4 556 938 A1

**FIG. 2**

EP 4 556 938 A1

DIGITAL
RESPONSE
SIGNAL
340

PRECODING
MATRIX
345

PRECODING
SIGNAL
348

PROCESSOR
130

# FIG. 3

400

402 — SET CALIBRATION MODE

404 — SEND TEST SIGNALS FOR EACH CHANNEL

406 — RECEIVE TEST RESPONSE SIGNALS AT EACH CHANNEL

408 — ESTIMATE CHANNEL RESPONSE FOR EACH CHANNEL BASED ON TEST RESPONSE SIGNALS

410 — DETERMINE PRECODING MATRIX

412 — SET SENSING MODE

414 — GENERATE SENSE SIGNALS FOR EACH CHANNEL

416 — PRECODE SENSE SIGNALS

418 — TRANSMIT PRECODED SIGNALS

420 — DETECT OBJECTS BASED ON RESPONSE SIGNALS

# FIG. 4

Europäisches
Patentamt

European
Patent Office

Office européen
des brevets

# EUROPEAN SEARCH REPORT

Application Number

EP 23 21 0023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/146645 A1 (KIM DONG KYOO [KR] ET AL) 25 May 2017 (2017-05-25) * paragraphs [0047], [0085], [0141], [0142], [0200]; claims 1,12; figures 1,2A,2B,2C * | 1-15 | INV. G01S7/02 G01S7/40 ADD. G01S13/931 |
| X | WO 2022/214883 A1 (RAFAEL ADVANCED DEFENSE SYSTEMS LTD [IL]) 13 October 2022 (2022-10-13) | 1-5,9-12 | |
| A | * page 1, line 7 - line 11; claim 1; figure 1 * * page 35, line 8 - line 10 * * page 21, line 11 - line 12 * | 6-8, 13-15 | |
| X | US 2021/181302 A1 (DUNCKLEE KEVIN [US] ET AL) 17 June 2021 (2021-06-17) | 1-5,9-12 | |
| A | * paragraphs [0005], [0094] * | 6-8, 13-15 | |
| X | US 2022/268914 A1 (TZADOK ASAF [US]) 25 August 2022 (2022-08-25) | 1-5,9-12 | TECHNICAL FIELDS SEARCHED (IPC) |
| A | * paragraph [0054]; claim 1; figure 6 * | 6-8, 13-15 | G01S |

The present search report has been drawn up for all claims

| Place of search | Date of completion of the search | Examiner |
|---|---|---|
| Munich | 4 April 2024 | Riccio, Ettore |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 21 0023

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2024

| Patent document cited in search report | Publication date | Patent family member(s) | | Publication date |
|---|---|---|---|---|
| US 2017146645 A1 | 25-05-2017 | US | 2017146645 A1 | 25-05-2017 |
| | | US | 2020088864 A1 | 19-03-2020 |
| WO 2022214883 A1 | 13-10-2022 | EP | 4320460 A1 | 14-02-2024 |
| | | WO | 2022214883 A1 | 13-10-2022 |
| US 2021181302 A1 | 17-06-2021 | CN | 114846350 A | 02-08-2022 |
| | | EP | 4062190 A1 | 28-09-2022 |
| | | US | 2021181302 A1 | 17-06-2021 |
| | | US | 2024004029 A1 | 04-01-2024 |
| | | WO | 2021126926 A1 | 24-06-2021 |
| US 2022268914 A1 | 25-08-2022 | CN | 116897304 A | 17-10-2023 |
| | | DE | 112022000490 T5 | 07-12-2023 |
| | | GB | 2618954 A | 22-11-2023 |
| | | JP | 2024508594 A | 28-02-2024 |
| | | US | 2022268914 A1 | 25-08-2022 |
| | | WO | 2022175864 A1 | 25-08-2022 |

EPO FORM P0459

For more details about this annex : see Official Journal of the European Patent Office, No. 12/82